# EUROPÄISCHE PATENTSCHRIFT

(11) **EP 1 447 183 B1**
(45) Veröffentlichungstag und Bekanntmachung des Hinweises auf die Patenterteilung: **30.11.2016**
(21) Anmeldenummer: 04002449.9
(22) Anmeldetag: 04.02.2004
(51) Int. Cl.: B25J 19/00, H02G 9/06

(54) **Roboter, deren Leitung durch einen axial nachgiebigen Balg geführt ist**
Robot with cables protected in bellows
robot dont les câbles d'alimentation sont protégés par des manchons élastiques

(30) Priorität: 05.02.2003 DE 10304652
(43) Veröffentlichungstag der Anmeldung: 18.08.2004
(73) Patentinhaber: Dürr Systems AG, 74321 Bietigheim-Bissingen (DE)
(72) Erfinder: Hezel, Thomas, 71679 Asperg (DE); Hein, Steffen, 71672 Marbach (DE); Sommer, Georg M., 71384 Weinstadt (DE)
(74) Vertreter: Beier, Ralph

(56) Entgegenhaltungen:
- EP-A- 1 036 711
- DE-A- 19 616 765
- JP-A- H11 277 478
- JP-U- S62 188 384
- US-A- 4 632 632

## Beschreibung

Die Erfindung betrifft eine Roboterhandachse, insbesondere für einen Lackierroboter, gemäß dem Oberbegriff des Anspruchs 1.

Aus US 4 708 580 sind Industrieroboter mit einer Handachse bekannt, die drei Freiheitsgrade aufweist, wobei die Handachse eine Innendurchführung für Signal- und Versorgungsleitungen aufweist. Bei einer Bewegung der Handachse in den einzelnen Freiheitsgraden werden die Leitungen in der Innendurchführung der Handachse in axialer Richtung gedehnt bzw. gestaucht und darüber hinaus einer Torsionsbelastung unterworfen. Dies wird bei den bekannten Industrierobotern mit einer derartigen Handachse dadurch berücksichtigt, dass die Leitungen in der Innendurchführung locker verlegt werden und deshalb ein ausreichendes axiales Spiel aufweisen.

Nachteilig an diesen bekannten Handachsen ist die Tatsache, dass die Leitungen im Betrieb beschädigt werden können, weil sie in der Innendurchführung der Handachse starken Reibungen an den Innenwandungen und den Übergangsradien ausgesetzt sind. Derartige Leitungsbeschädigungen führen bei Industrierobotern in der Produktion zu kostenträchtigen Produktionsausfällen. Darüber hinaus muss bei einer Leitungsbeschädigung immer ein vollständiges Leitungspaket ausgewechselt werden, was zu erheblichen Reparaturkosten führt.

Aus JP H11 277478 A ist eine Roboterhandachse für einen Lackierroboter bekannt, bei der die Leitungen zumindest teilweise durch einen Balg in der Innendurchführung der Handachse geschützt werden.

Ein weiterer Nachteil der bekannten Handachsen besteht darin, dass die Leitungen in der Innendurchführung der Handachse ohne eine geeignete Abdichtung geführt werden, um überhaupt eine Bewegung der Handachse zu ermöglichen. Aufgrund der unzureichenden Abdichtung der Leitungen kann es deshalb zu einem Flüssigkeitsaustausch zwischen der Handachse und dem Roboterarm kommen, was eine kostenintensive Reinigung erfordert.

Aus US 4 632 632 A und DE 196 16 765 A sind linear bewegliche Anordnungen bekannt, wobei es sich jedoch nicht um eine Roboterhandachse mit drehbaren Gliedern handelt. Schließlich ist aus EP 1 036 711 A eine Wanddurchführung bekannt, die als solche ebenfalls fernliegend ist.

Der Erfindung liegt deshalb die Aufgabe zugrunde, eine Roboterhandachse mit einer Leitungsdurchführung zu schaffen, bei der eine Beschädigung der Leitungen während des Betriebs verhindert wird und ein Flüssigkeitsaustausch zwischen der Handachse und dem Roboterarm unterbleibt, wobei die Leitungen ein ausreichendes axiales Spiel aufweisen müssen, um einer Bewegung der Handachse entsprechend folgen zu können.

Die Aufgabe wird, ausgehend von der eingangs beschriebenen bekannten Handachse gemäß dem Oberbegriff des Anspruchs 1, durch die kennzeichnenden Merkmale des Anspruchs 1 gelöst.

Die Erfindung sieht vor, die in der Leitungsdurchführung befindliche Leitung mittels eines innerhalb der Leitungsdurchführung angeordneten axial nachgiebigen Balgs aufzuhängen, der zum einen ein axiales Spiel der Leitung ermöglicht und zum anderen eine Führung für die Leitung bildet.

In einem bevorzugten Ausführungsbeispiel sind zusätzlich die Leitungen in der Leitungsdurchführung der Handachse mindestens teilweise spiralförmig oder mäanderförmig angeordnet, um ein zusätzliches axiales Spiel der Leitung bei einer Bewegung der Handachse zu ermöglichen.

In einem bevorzugten Ausführungsbeispiel der Erfindung ist der Balg an mindestens einem Ende der Leitungsdurchführung angeordnet und führt die Leitungen dort axial nachgiebig. Es ist jedoch auch möglich, dass in der Leitungsdurchführung jeweils an den Übergangsstellen zu einem benachbarten Glied des Roboters ein Balg angeordnet ist, um die Leitungen dort axial nachgiebig zu führen. Der Balg erstreckt sich bei dem erfindungsgemäßen Roboter also vorzugsweise nicht über die gesamte Länge der Leitungsdurchführung, sondern dient im wesentlichen nur zur axial nachgiebigen Aufhängung der Leitungen in der Leitungsdurchführung. Hierbei ermöglicht der Balg vorzugsweise eine axiale Relativbewegungen zwischen der Leitungsdurchführung und den darin geführten Leitungen, wobei die Leitungsdurchführung selbst ebenfalls als Balg ausgeführt sein kann. Es besteht jedoch alternativ auch die Möglichkeit, dass die Leitungsdurchführung lediglich aus einem Rohr besteht.

Vorzugsweise dichtet der Balg die Leitungsführung darüber hinaus auch ab, um beispielsweise bei einem Lackierroboter einen Flüssigkeitsaustausch zwischen der Handachse und dem Roboterarm zu verhindern. Hierbei geht die Leitungsdurchführung vorzugsweise durch den Roboterarm und die Handachse hindurch, wobei die Leitungsdurchführung an dem Übergang zwischen dem Roboterarm und der Handachse durch den Balg abgedichtet ist. Der Balg hat hierbei also zwei technische Funktionen, nämlich zum einen die axial nachgiebige Führung der Leitung in der Leitungsdurchführung und zum anderen die Abdichtung der Leitungsdurchführung.

Die Erfindung ist jedoch nicht darauf beschränkt, dass der Balg die Leitungsdurchführung an dem Übergang zwischen dem Roboterarm und der Handachse abdichtet. Es ist im Rahmen der Erfindung vielmehr auch möglich, dass der Balg die Leitungsdurchführung an anderen Übergängen zwischen zwei benachbarten Gliedern des Roboters abdichtet.

Der im Rahmen der Erfindung verwendete Begriff eines Balgs ist allgemein zu verstehen und nicht auf die vorzugsweise eingesetzten Faltenbälge beschränkt. Der Begriff eines Balgs umfasst beispielsweise auch solche nachgiebigen Elemente, welche die Leitung axial nachgiebig führen.

Als Material für den Balg eignen sich vorzugsweise Natur-Kautschuk, Styrol-Butadien-Kautschuk, Acryl-Nitril-Kautschuk, Chlorbutadien-Kautschuk, Fluor-Kautschuk oder Polychlortetrafluorethylen. Diese Werkstoffe haben sich hinsichtlich Haltbarkeit, Nachgiebigkeit und Dichteverhalten als vorteilhaft erwiesen. Die Erfindung ist jedoch nicht auf die vorstehend aufgeführten Materialien zur Herstellung des Balgs beschränkt. Vielmehr kann der Balg auch aus anderen nachgiebigen Materialien bestehen, wobei vielfältige Kunststoffe zum Einsatz kommen können.

Darüber hinaus kann der Balg auch aus Metall bestehen, wobei die axiale Nachgiebigkeit des Balgs durch Falten in dem Balg erreicht wird, weshalb der Balg in dieser Ausführungsform der Erfindung auch als Metallfaltenbalg bezeichnet wird.

In einer bevorzugten Ausführungsform der Erfindung nimmt die Leitungsdurchführung mehrere Leitungen auf, wobei die Leitungen durch jeweils einen Balg geführt werden.

Dies bietet den Vorteil, dass die axiale Nachgiebigkeit der einzelnen Bälge individuell auf die jeweilige Leitung abgestimmt werden kann. Die einzelnen Bälge können hierbei also unterschiedliche Eigenschaften aufweisen, wie beispielsweise eine unterschiedliche Nachgiebigkeit, Elastizität und/oder Maximalauslenkung in axialer Richtung.

Darüber hinaus kann auch das Dichtungsvermögen der einzelnen Bälge unterschiedlich sein, da beispielsweise Elektroleitungen in einer separaten Leitungsdurchführung verlegt sein können, so dass die zugehörigen Bälge nicht unbedingt abgedichtet sein müssen. Die Bälge für Lackleitungen sollten dagegen abgedichtet sein, um einen Flüssigkeitsaustausch zwischen der Handachse und dem Roboterarm zu vermeiden.

Die Erfindung ist jedoch nicht auf solche Ausführungsformen beschränkt, bei denen die Bälge für die einzelnen Leitungen unterschiedliche Eigenschaften aufweisen. Es besteht im Rahmen der Erfindung auch die Möglichkeit, dass die Bälge für die einzelnen Leitungen baugleich sind.

Darüber hinaus ist es alternativ auch möglich, dass mehrere Leitungen gemeinsam durch einen einzigen Balg geführt werden. In diesem Fall sind die Leitungen vorzugsweise durch eine Führungsplatte hindurch geführt, welche die Leitungen relativ zueinander in einer vorgegebenen Position fixiert. Die Führungsplatte mit den einzelnen Leitungen wird dann als Ganzes von dem Balg axial nachgiebig geführt. Der Balg umschließt deshalb vorzugsweise die Führungsplatte und wird vorzugsweise durch eine Ringfeder gegen den Umfangsrand der Führungsplatte gedrückt.

Der Balg ist vorzugsweise an einer Montageplatte befestigt, die vorzugsweise eine Bohrung zur Durchführung der Leitung aufweist.

Zur Befestigung des Balgs an der Montageplatte kann der Balg einen Befestigungsflansch aufweisen, wobei die Verbindung zwischen dem Befestigungsflansch des Balgs und der Montageplatte beispielsweise durch eine Verschraubung erfolgen kann. Diese Art der Befestigung eignet sich insbesondere bei einer Führung mehrerer Leitungen durch einen Balg.

Die Befestigung des Balgs kann jedoch auch mit Hilfe eines Einschraubnippels erfolgen, der in eine Bohrung der Montageplatte eingeschraubt wird und auf den der Balg aufgepresst wird. Diese Art der Befestigung eignet sich insbesondere dann, wenn jede Leitung durch einen separaten Balg geführt wird.

Die axiale Nachgiebigkeit des Balgs liegt vorzugsweise im Bereich von 5 mm bis 30 mm, wobei beliebige Zwischenwerte möglich sind. Grundsätzlich besteht jedoch auch die Möglichkeit, dass der Balg eine kleinere oder größere axiale Nachgiebigkeit aufweist.

Bei der eingangs erwähnten Ausführungsform der Erfindung mit einer spiralförmigen Führung der Leitung in der Leitungsdurchführung wird die Leitung vorzugsweise um ein Führungselement gewickelt, das vorzugsweise mittig angeordnet ist. Bei diesem Führungselement kann es sich beispielsweise um eine Leitung handeln, die problemlos axial dehnbar ist. In der Leitungsdurchführung befindet sich dann ein Leitungspaket mit axial dehnbaren Leitungen in der Mitte, die von weiteren Leitungen spiralförmig umwickelt sind.

Weiterhin ist zu erwähnen, dass der im Rahmen der Erfindung verwendete Begriff einer Leitung ebenfalls allgemein zu verstehen ist und beispielsweise Schläuche, Rohre, Lichtleiter sowie elektrische Leitungen umfasst.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.

Es zeigen:
- Figur 1: eine perspektivische Ansicht eines Roboterarms mit einer Handachse mit drei Freiheitsgraden,
- Figur 2a: eine Perspektivansicht eines Anschlussstücks des Roboterarms am Übergang der Handachse,
- Figur 2b: eine teilaufgeschnittene Detailansicht von Figur 2a,
- Figur 3a: eine Perspektivansicht eines alternativen Anschlussstücks des Roboterarms am Übergang zu der Handachse,
- Figur 3b: eine teilaufgeschnittene Detailansicht aus Figur 3a sowie
- Figur 4: eine teilweise aufgeschnittene Ansicht der in Figur 1 dargestellten Handachse bei einem Ausführungsbeispiel der Erfindung.

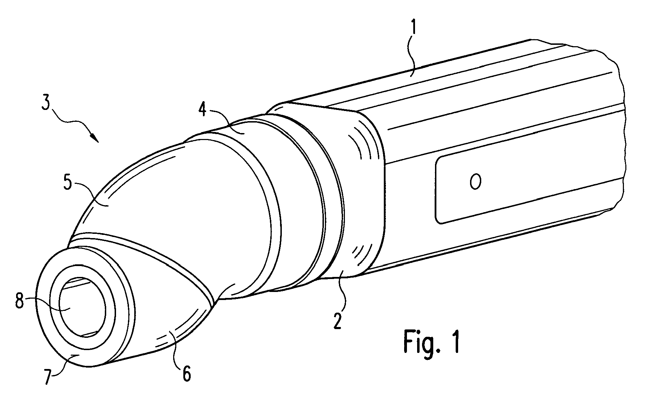

Die perspektivische Ansicht in Figur 1 zeigt einen Roboterarm 1 eines ansonsten in herkömmlicher Weise aufgebauten Lackierroboters zur Lackierung von Kraftfahrzeugteilen.

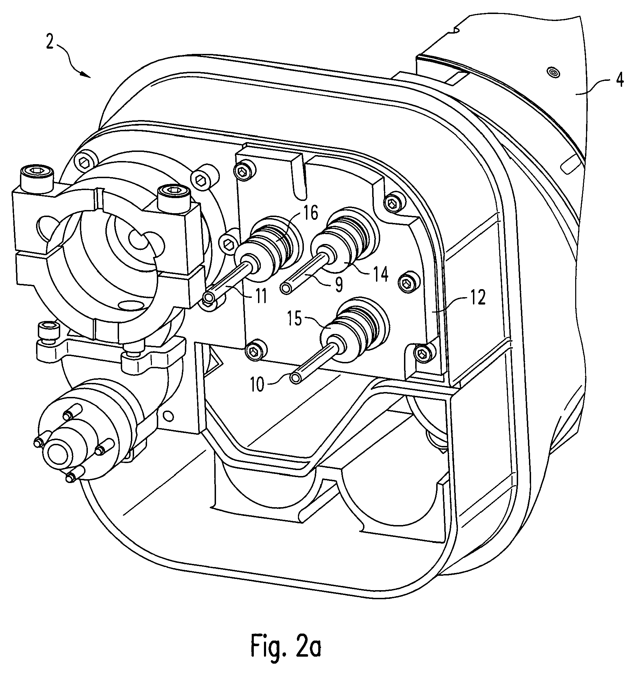

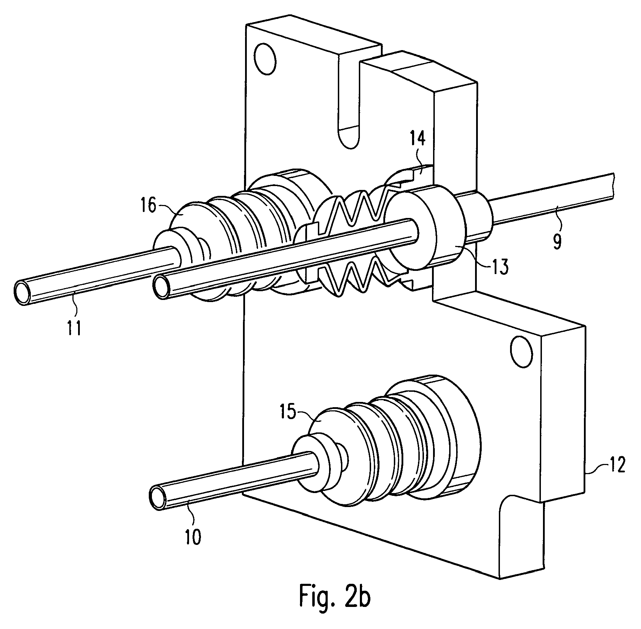

An seinem distalen Ende weist der Roboterarm 1 ein Anschlussstück 2 zum Anschluss einer Roboterhandachse 3 auf, wobei verschiedene erfindungsgemäße Ausgestaltungen des Anschlussstücks 2 in den Figuren 2a und 2b beziehungsweise 3a und 3b detailliert dargestellt sind.

Die Roboterhandachse 3 weist drei relativ zueinander verdrehbaren Glieder 4, 5, 6 auf, wobei das Glied 4 von dem Anschlussstück 2 geführt wird und relativ dazu verdrehbar ist.

Das Glied 6 weist dagegen eine Stirnfläche 7 zur Befestigung eines herkömmlichen Rotationszerstäubers auf.

Weiterhin ist zu erwähnen, dass die Roboterhandachse 3 eine Leitungsdurchführung 8 aufweist, durch die Leitungen 9, 10, 11 von dem Roboterarm 1 durch die Roboterhandachse 3 hindurch zu dem Rotationszerstäuber geführt werden können.

Die Leitungen 9, 10, 11 sind in den Figuren 2a und 2b dargestellt, wobei es sich um Schläuche zur Versorgung des Rotationszerstäubers mit Beschichtungsmaterial, Antriebsluft und Lenkluft handelt.

Im Betrieb werden die Leitungen, 9, 10, 11 aufgrund der Drehungen der einzelnen Glieder 4, 5, 6 der Roboterhandachse 3 in axialer Richtung gedehnt bzw. gestaucht und darüber hinaus eine Torsionsbelastung unterworfen. Zur Ermöglichung eines axialen Längenausgleichs in Abhängigkeit von der Roboterstellung sind die Leitungen 9, 10, 11 deshalb in dem Anschlussstück 2 axial nachgiebig geführt.

Hierzu ist in das Anschlussstück 2 eine Montageplatte 12 eingeschraubt, die drei Bohrungen zur Durchführung der Leitungen 9, 10, 11 aufweist. In diese Bohrungen ist jeweils ein Einschraubnippel 13 eingeschraubt, in dem die Leitungen 9, 10, 11 axial verschiebbar geführt werden.

Auf der dem Roboterarm 1 zugewandten Seite der Montageplatte 12 ist jeweils ein Faltenbalg 14, 15, 16 auf den Einschraubnippel 13 aufgepreßt. Die Faltenbälge 14, 15, 16 führen die Leitungen 9, 10, 11, also axial nachgiebig und dichten darüber hinaus die Leitungsdurchführungen ab, wodurch ein Flüssigkeitsaustausch zwischen der Roboterhandachse 3 und dem Roboterarm 1 verhindert wird. Dies ist vorteilhaft, weil ein Flüssigkeitsaustausch zwischen der Handachse 3 und dem Roboterarm 1 eine kostenintensive Reinigung erforderlich machen würde.

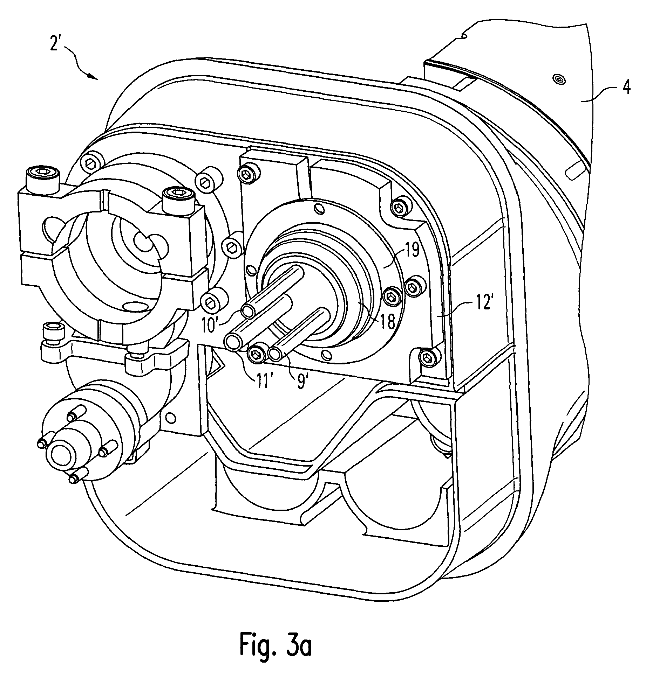

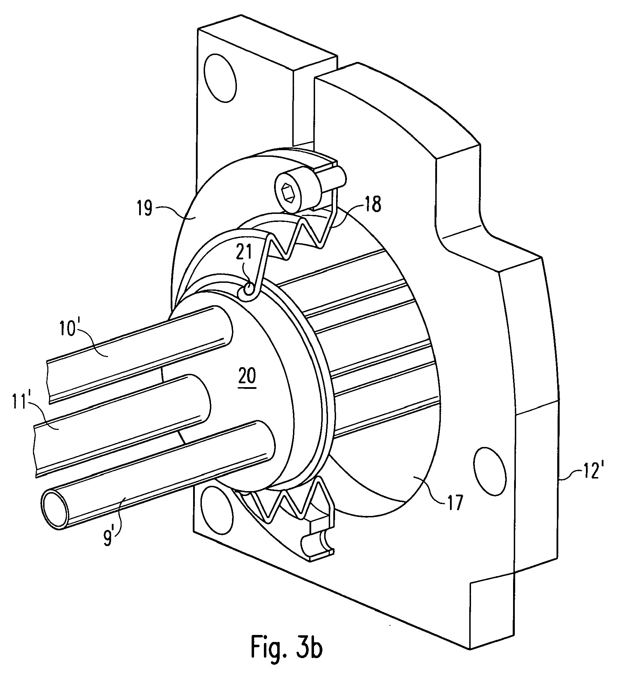

Das in den Figuren 3a und 3b dargestellte Ausführungsbeispiel stimmt weitgehend mit dem vorstehend beschriebenen und in den Figuren 2a und 2b dargestellten Ausführungsbeispiel überein, so dass für übereinstimmende Bauelemente dieselben Bezugszeichen verwendet werden, die zur Unterscheidung lediglich durch ein Apostroph gekennzeichnet sind. Weiterhin werden im Folgenden lediglich die Besonderheiten dieses Ausführungsbeispiels beschrieben, während ansonsten auf die vorstehende Beschreibung zu den Figuren 2a und 2b verwiesen wird, um unnötige Wiederholungen zu vermeiden.

Eine Besonderheit dieses Ausführungsbeispiels besteht darin, dass die Leitung 9', 10', 11' gemeinsam durch eine einzige Bohrung 17 in der Montageplatte 12' hindurch geführt werden und von einem einzigen Faltenbalg 18 axial nachgiebig geführt werden.

Zur Befestigung des Faltenbalgs 18 an der Montageplatte 12' weist der Faltenbalg 18 einen ringförmigen Befestigungsflansch 19 auf, der an der Montageplatte 12' festgeschraubt ist.

Die einzelnen Leitungen 9', 10', 11' sind durch Bohrungen in einer Führungsplatte 20 hindurch geführt, wobei die Führungsplatte 20 kreisscheibenförmig ist und die Leitungen 9', 10', 11' in einer vorgegebenen Position relativ zueinander fixiert. Die Mündungsöffnung des Faltenbalgs 18 umschließt die Führungsplatte 20 an deren Umfangsrand, wobei eine Spannfeder 21 den Faltenbalg auf den Umfangsrand der Führungsplatte 20 presst.

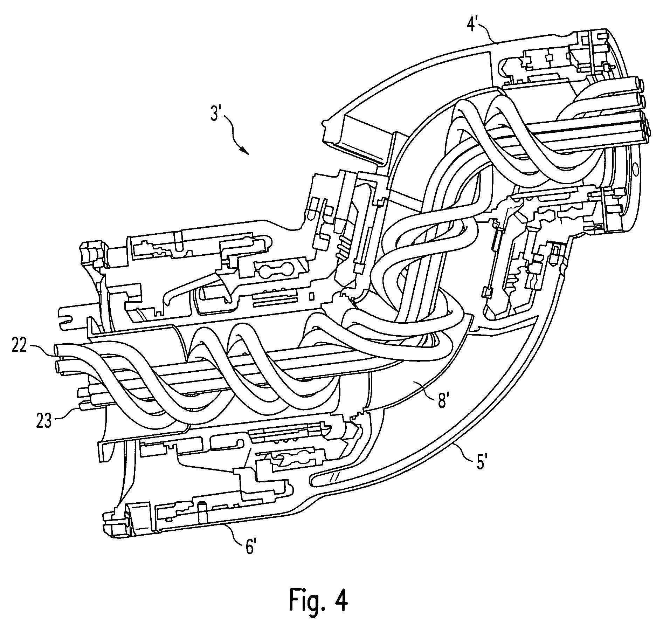

Schließlich zeigt Figur 4 ein weiteres Ausführungsbeispiel einer erfindungsgemäßen Roboterhandachse 3' mit drei relativ zueinander verdrehbaren Gliedern 4', 5', 6' und einer Leitungsdurchführung 8', wobei in der Leitungsdurchführung 8' zahlreiche Leitungen 22 spiralförmig um mittig angeordnete weitere Leitungen 23 geführt sind. Die spiralförmige Führung der Leitungen 23 ermöglicht hierbei einen axialen Längenausgleich bei einer Bewegung der einzelnen Glieder 4', 5', 6' der Roboterhandachse 3'.

Die Erfindung ist nicht auf die vorstehend beschriebenen Ausführungsbeispiele der Erfindung beschränkt. Vielmehr ist eine Vielzahl von Varianten und Abwandlungen möglich, die ebenfalls von dem Erfindungsgedanken Gebrauch machen und deshalb in den durch die Ansprüche definierten Schutzbereich fallen.

## Patentansprüche

1. Roboterhandachse für einen Roboter, insbesondere für einen Lackierroboter, mit
a) mehreren beweglichen Glieder (4-6, 4'-6'), die zueinander drehbar sind,
b) einer Leitungsdurchführung (8, 8'), und
c) mindestens einer Leitung (9-11, 9'-11', 22, 23), die von der Leitungsdurchführung (8, 8') aufgenommen wird,
**dadurch gekennzeichnet,**
d) dass die Leitung (9-11, 9'-11', 22, 23) mittels eines innerhalb der Leitungsdurchführung (8, 8') angeordneten axial nachgiebigen Balgs (14-16, 18) aufgehängt ist, so dass bei einer Änderung der Roboterstellung eine Axialbewegung der Leitung (9-11, 9'-11', 22, 23) ermöglicht wird.

2. Roboterhandachse gemäß Anspruch 1, **dadurch gekennzeichnet, dass** die Leitung (9-11, 9'-11', 22, 23) in der Leitungsdurchführung (8, 8') mindestens teilweise spiralförmig oder mäanderförmig angeordnet ist, so dass bei einer Änderung der Roboterstellung eine Axialbewegung der Leitung (9-11, 9'-11', 22, 23) ermöglicht wird.

3. Roboterhandachse nach Anspruch 1 oder 2, **dadurch gekennzeichnet, dass** der Balg (14-16, 18) die Leitungsdurchführung (8) abdichtet.

4. Roboterhandachse nach einem der vorhergehenden Ansprüche, **dadurch gekennzeichnet, dass** der Balg (14-16, 18) an mindestens einem Ende der Leitungsdurchführung (8) und/oder an einem Übergang zu einem anderen Glied (4-6, 4'-6') des Roboters angeordnet ist.

5. Roboterhandachse nach mindestens einem der vorhergehenden Ansprüche, **dadurch gekennzeichnet, dass** mehrere Leitungen (9-11) vorgesehen sind, wobei die Leitungen (9-11) jeweils einzeln durch jeweils einen Balg (14-16) geführt werden.

6. Roboterhandachse nach Anspruch 5, **dadurch gekennzeichnet, dass** die Bälge (14-16) für die einzelnen Leitungen (9-11) unterschiedliche Eigenschaften aufweisen.

7. Roboterhandachse nach Anspruch 6, **dadurch gekennzeichnet, dass** die Bälge (14-16) für die einzelnen Leitungen (9-11) eine unterschiedliche Nachgiebigkeit, Elastizität und/oder Maximalauslenkung in axialer Richtung und/oder ein unterschiedliches Dichtungsvermögen aufweisen.

8. Roboterhandachse nach mindestens einem der vorhergehenden Ansprüche, **dadurch gekennzeichnet, dass** mehrere Leitungen (14'-16') vorgesehen sind, wobei die Leitungen (14'-16') gemeinsam durch einen Balg (18) geführt werden.

9. Roboterhandachse nach Anspruch 8, **dadurch gekennzeichnet, dass** die Leitungen (14'-16') durch eine Führungsplatte (20) hindurchgeführt sind, die von dem Balg (18) axial nachgiebig geführt wird.

10. Roboterhandachse nach Anspuch 9, **dadurch gekennzeichnet, dass** der Balg (18) die Führungsplatte (20) umschließt und durch eine Spannfeder (21) gegen den Umfangsrand der Führungsplatte (20) gedrückt wird.

11. Roboterhandachse nach mindestens einem der vorhergehenden Ansprüche, **dadurch gekennzeichnet, dass** der Balg (18) einen Befestigungsflansch (19) aufweist, der an einer Montageplatte (12') befestigt ist.

12. Roboterhandachse nach mindestens einem der vorhergehenden Ansprüche, **dadurch gekennzeichnet, dass** der Balg (14-16) auf einen Einschraubnippel (13) aufgepresst ist, wobei der Einschraubnippel (13) in eine Bohrung in der Montageplatte eingeschraubt ist.

13. Roboterhandachse nach mindestens einem der vorhergehenden Ansprüche, **dadurch gekennzeichnet, dass** der Balg (14-16, 18) mindestens teilweise aus Natur-Kautschuk, Styrol-Butadien-Kautschuk, Acryl-Nitril-Kautschuk, Chlorbutadien-Kautschuk, Fluor-Kautschuk oder Polychlortetrafluorethylen besteht.

14. Roboterhandachse nach mindestens einem der vorhergehenden Ansprüche, **dadurch gekennzeichnet, dass** der Balg (14-16, 18) eine axiale Nachgiebigkeit aufweist, die im Bereich von 5 mm bis 30 mm liegt.

15. Roboterhandachse nach Anspruch 1, **dadurch gekennzeichnet, dass** die Leitung (22) spiralförmig um ein in der Leitungsdurchführung (8') angeordnetes Führungselement gewickelt ist.

16. Roboterhandachse nach Anspruch 15, **dadurch gekennzeichnet, dass** das Führungselement eine axial dehnbare Leitung (23) ist.

## Claims

1. Robot hand wrist for a robot, particularly for a painting robot, with
a) several moveable members (4-6, 4'-6') which are rotatable relative to each other,
b) a line duct (8, 8'),
c) at least one line (9-11, 9'-11', 22, 23) received by said line duct (8, 8'),
**characterized in that**
d) the line (9-11, 9'-11', 22, 23) is carried by an axially compliant bellows (14-16, 18) within the line duct (8, 8'), so that an axial movement of the line (9-11, 9'-11', 22, 23) is possible during a change in the robot position.

2. Robot hand wrist according to claim 1, **characterized in that** the line (9-11, 9'-11', 22, 23) is disposed at least partially in a spiral or winding shape in the line duct (8, 8'), so that an axial movement of the line (9-11, 9'-11', 22, 23) is made possible during a change in the robot position.

3. Robot hand wrist according to claim 1 or 2, **characterized in that** the bellows (14-16, 18) seals the line duct (8).

4. Robot hand wrist according to any of the preceding claims, **characterized in that** the bellows (14-16, 18) is arranged on at least one end of the line duct (8, 8') and/or at a transition to another member (4-6, 4'-6') of the robot.

5. Robot hand wrist according to at least one of the preceding claims, **characterized in that** several lines (9-11) are furnished, wherein each of the lines (9-11) is carried individually by a bellows (14-16) each.

6. Robot hand wrist according to claim 5, **characterized in that** the bellows (14-16) for the individual lines (9-11) have different properties.

7. Robot hand wrist according to claim 6, **characterized in that** the bellows (14-16) for the individual lines (9-11) have a different resilience, flexibility and/or maximum axial displacement and/or a different sealing power.

8. Robot hand wrist according to at least one of the preceding claims, **characterized in that** several lines (14'-16') are furnished, wherein the lines (14'-16') are passed jointly through one bellows (18).

9. Robot hand wrist according to claim 8, **characterized in that** the lines (14'-16') are passed through a guide plate (20) which is carried by the bellows (18) in an axially compliant manner.

10. Robot hand wrist according to claim 9, **characterized in that** the bellows (18) encompasses the guide plate (20) and is pressed against the peripheral edge of the guide plate (20) by a tension spring (21).

11. Robot hand wrist according to at least one of the preceding claims, **characterized in that** the bellows has an attaching flange (19) which is attached to a mounting plate (12').

12. Robot hand wrist according to at least one of the preceding claims, **characterized in that** the bellows (14-16) is pressed onto a screw-in nipple (13), where the screw-in nipple (13) is threaded into a hole in the mounting plate.

13. Robot hand wrist according to at least one of the preceding claims, **characterized in that** the bellows (14-16) consists at least partially of natural rubber, stryrene butadiene rubber, acrylic nitrile rubber, chlorobutadiene rubber, fluorine rubber or polychlorotetrafluoroethylene.

14. Robot hand wrist according to at least one of the preceding claims, **characterized in that** the bellows (14-16, 18) has an axial compliance in the range of 5 mm to 30 mm.

15. Robot hand wrist according to claim 1, **characterized in that** the line (22) is wound spirally around a guide element located in the conduit (8').

16. Robot hand wrist according to claim 15, **characterized in that** the guide element is an axially extensible line (23).

## Revendications

1. Axe de main de main robotique pour un robot, plus particulièrement pour un robot de peinture, avec
a) plusieurs membres mobiles (4-6, 4'-6') qui peuvent tourner les uns par rapport aux autres,
b) un passage de conduite (8, 8') et
c) au moins une conduite (9-11, 9'-11', 22, 23) qui est logée par le passage de conduite (8, 8'),
**caractérisé en ce que**
d) la conduite (9-11, 9'-11', 22, 23) est suspendue au moyen d'un soufflet flexible axialement (14-16, 18) disposé à l'intérieur du passage de conduite (8, 8'), de façon à ce que, lors d'une modification de la position du robot, un mouvement axial de la conduite (9-11, 9'-11', 22, 23) soit possible.

2. Axe de main robotique selon la revendication 1, **caractérisé en ce que** la conduite (9-11, 9'-11', 22, 23) est disposée dans le passage de conduite (8, 8') au moins partiellement sous la forme de spirales ou de sinuosités, de façon à ce que, lors d'une modification de la position du robot, un mouvement axial de la conduite (9-11, 9'-11', 22, 23) soit possible.

3. Axe de main robotique selon la revendication 1 ou 2, **caractérisé en ce que** le soufflet (14-16, 18) étanchéifie le passage de conduite (8).

4. Axe de main robotique selon l'une des revendications précédentes, **caractérisé en ce que** le soufflet (14-16, 18) est disposé au niveau d'au moins une extrémité du passage de conduite (8) et/ou au niveau d'une transition vers un autre membre (4-6, 4'-6') du robot.

5. Axe de main robotique selon au moins l'une des revendications précédentes, **caractérisé en ce que** plusieurs conduites (9-11) sont prévues, les conduites (9-11) étant guidées individuellement chacune à travers un soufflet (14-16).

6. Axe de main robotique selon la revendication 5, **caractérisé en ce que** les soufflets (14-16) présente des propriétés différentes pour les différentes conduites (9-11).

7. Axe de main robotique selon la revendication 6, **caractérisé en ce que** les soufflets (14-16) pour les différentes conduites (9-11) présentent chacun une flexibilité, une élasticité et/ou une déviation maximale dans la direction axiale et/ou une capacité d'étanchéité différente.

8. Axe de main robotique selon au moins l'une des revendications précédentes, **caractérisé en ce que** plusieurs conduites (14'-16') sont prévues, les conduites (14'-16') étant guidées ensemble à travers un soufflet (18).

9. Axe de main robotique selon la revendication 8, **caractérisé en ce que** les conduites (14'-16') sont guidées par une plaque de guidage (20) qui est guidée de manière flexible axialement par le soufflet (18).

10. Axe de main robotique selon la revendication 9, **caractérisé en ce que** le soufflet (18) entoure la plaque de guidage (20) et est comprimé par un ressort de serrage (21) contre le bord périphérique de la plaque de guidage (20).

11. Axe de main robotique selon au moins l'une des revendications précédentes, **caractérisé en ce que** le soufflet (18) comprend une bride de fixation (19) qui est fixée sur une plaque de montage (12').

12. Axe de main robotique selon au moins l'une des revendications précédentes, **caractérisé en ce que** le soufflet (14-16) est pressé sur un raccord fileté (13), le raccord fileté (13) étant vissé dans un alésage dans la plaque de montage.

13. Axe de main robotique selon au moins l'une des revendications précédentes, **caractérisé en ce que** le soufflet (14-16, 18) est constitué au moins partiellement de caoutchouc naturel, de caoutchouc styrol-butadiène, de caoutchouc acryle-nitrile, de caoutchouc chlorobutadiène, de caoutchouc au fluor ou de polychlorotétrafluoréthylène.

14. Axe de main robotique selon au moins l'une des revendications précédentes, **caractérisé en ce que** le soufflet (14-16, 18) présente une flexibilité axiale qui est de l'ordre de 5 mm à 30 mm.

15. Axe de main robotique selon la revendication 1, **caractérisé en ce que** la conduite (22) est enroulée en spirale autour d'un élément de guidage disposé dans le passage de conduite (8').

16. Axe de main robotique selon la revendication 1, **caractérisé en ce que** l'élément de guidage est une conduite à dilatation axiale (23).
